(19) Europäisches Patentamt
European Patent Office
Office européen des brevets

(11) **EP 2 058 493 A1**

(12) **EUROPEAN PATENT APPLICATION**

(43) Date of publication:
**13.05.2009 Bulletin 2009/20**

(51) Int Cl.:
*F02D 41/00* (2006.01)   *F02D 41/14* (2006.01)
*F02D 41/22* (2006.01)

(21) Application number: **07120463.0**

(22) Date of filing: **12.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Iveco Motorenforschung AG**
**CH-9320 Arbon (CH)**

(72) Inventors:
• **Schoeni, Andreas**
 **9315 Neukirch-Egnach (CH)**
• **Marconi, Michele**
 **9320 Arbon (CH)**

• **Rossotto, Marco**
 **10132 Torino (IT)**
• **Salio, Stefano**
 **10025 Pino Torinese (IT)**
• **Wagner, Joachim**
 **70176 Stuttgart (DE)**
• **Gebers, Michael**
 **73728 Esslingen (DE)**

(74) Representative: **Borsano, Corrado et al**
 **Notarbartolo & Gervasi S.p.A.**
 **Corso di Porta Vittoria, 9**
 **20122 Milano (IT)**

(54) **A diagnostic method for a vehicle engine apparatus, provided with sensors**

(57)   A diagnostic method for a vehicle engine apparatus, said method comprising the following operations: the determination of at least three reciprocally and mathematically independent magnitudes each based on at least part of a series of parameters including:
intake air flow rate measured by a specific sensor (8) $(Air_{hfm})$;
a reference value of the intake air flow rate $(Air_{ref})$

pressure $(P_{in})$ and temperature $(T_{in})$ in the air inlet line of said engine;
percentage of oxygen present in the exhaust gases and fuel supply quantity;
the comparison of said at least three magnitudes, for the determination of possible operation faults.

An engine apparatus and computer program adapted to implement such method, and a vehicle equipped with said engine apparatus.

Fig. 1

**Description**

FIELD OF THE INVENTION

The present invention relates to a method for evaluating the efficacy of on-board sensors and the air system of an engine for vehicle, specifically industrial vehicles.

PRIOR ART

Very complex management systems are increasingly more necessary aboard vehicles, specifically industrial vehicles, for ensuring the correct operation of both the engine in all conditions of use and of the various on-board devices, such as the exhaust gas treatment, the exhaust gas recirculation devices. For example, the fuel injection, the opening of the recirculation line valve, the opening of the variable geometry turbine nozzle, where fitted, are generally controlled by specific control units according to the engine running conditions, the composition of exhaust gases from the engine and the conditions of the treatment devices. The detection of a series of parameters, which may be detected by means of sensors, is thus necessary for the operation of such management systems. Furthermore, the adjustment of the various control units must be sufficiently precise.

The following are among the components more frequently present aboard a vehicle, specifically a vehicle provided with supercharged engine, and more specifically a diesel engine as those commonly applied to industrial vehicles. An air flow sensor, which is commonly located on the intake line, generally upstream of the supercharging compressor, a supercharging pressure sensor and a supercharging temperature sensor, generally located on the intake line downstream of the supercharging compressor (or compressors if there are more than one, as in the case of multiple stage supercharging or with compressors in parallel) and downstream an intercooling device if available, prior to introduction into the engine but downstream the mixing point of a an exhaust gas recirculation (EGR) system if available, e.g. in the intake manifold. One or various exhaust gas composition sensors: specifically, there is generally a sensor adapted to detect the percentage of oxygen present in the exhaust gases, commonly known as lambda (or oxygen) sensor. The latter is mainly used to adjust the fuel injection, in petrol engines provided with catalyser. In the case of diesel engines, it is also necessary for a correct regulation of the engine exhaust gas recirculation flow rate, so as to reduce the generation of pollutants or to guarantee exhaust gas conditions suited to the good operation of treatment systems (catalytic systems, particulate trap regeneration, etc.). Furthermore, in diesel engine there is an exhaust gas recirculation line which appropriately connects the intake line with the engine exhaust line. Various devices (pumps, Venturi tubes or throttling device in the air intake manifold) may be provided (specifically in the case of recirculation on the high pressure branch between a point upstream of the turbine on the exhaust line in a point downstream of the intake line compressor, however if a sufficient distance between the recirculation line ends is not otherwise ensured) to allow a suitable flow of recirculated gases in all conditions. Moreover some devices to condition the recirculated exhaust gas (EGR cooler with or without by-pass) may be provided. Moreover, the adjustment may be performed by means of a valve controlled by an electronic control system. The valve is completely closed if no recirculation is necessary.

The engine is regulated as shown above according to the values measured by the sensors. The most common problems which may occur include incorrect detection of the intake air flow rate, due to the loss of calibration of the sensor, or to losses on the intake line (with intake of external air downstream of the sensor if the loss is upstream of the compressor or the loss of air outwards if the loss is downstream of the compressor) or to an incorrect recirculated exhaust gas flow (EGR) due to incorrect function of the control valve (7).

Furthermore, also the temperature and pressure sensors may be subject to error. Also the lambda sensor may be subject to faults or incorrect calibration (e.g if the signal is used for the emission monitoring (e.g. due legislative On Board Diagnostic OBD requests).

Another common problem is the evaluation error of the recirculated gas flow rate, e.g. due to valve losses, or other systematic errors, due to incorrect evaluations, e.g. of the volumetric efficiency (filling) of the engine, or of the fuel injection flow rate. It is indeed known that the flow rate supplied to the injectors is subject to considerable errors (e.g. approximately 2 mg/cycle) which, at a low load (minor fuel flow rates), may be even 20% of the real value.

Since, as mentioned above, among the most common problems there is the incorrect calibration of the air flow rate sensor or errors in evaluating the flow rate due to losses, the control units are not able to periodically compare the measured flow rate values against a flow rate value calculated as from the supercharging temperature and pressure, the engine speed and the volumetric efficiency (obtainable according to the engine speed from normally available models). The air flow rate sensor may be recalibrated if a significant difference is detected. This method does not account for the fact that there may be other causes of error, whereby leading to the possible generation of systematic errors.

The presence of possible systematic errors is sometimes detected by means of diagnostic tests to be performed at the workshop, e.g. tests either scheduled or run according to needs. In order to obtain the data detected by the control unit, the control unit may further be connected in known manner to an external control unit, such as a computer. However, it is often difficult, even if a fault is detected, to trace back to the possible cause without removing the components.

It would be desirable to be able to perform a diagnostic test capable of identifying the component on the basis of possible errors, reducing the need to remove the single components and/or to perform measurements with instruments external to the vehicle.

SUMMARY

The above-identified problems were solved according to the present invention by a diagnostic method for a vehicle engine apparatus, said method comprising the following operations: the determination of at least three reciprocally and mathematically independent magnitudes each based on at least part of a series of parameters including:

intake air flow rate measured by a specific sensor ($Air_{hfm}$);

pressure ($p_{in}$) and temperature ($T_{in}$) measured by means of specific sensors in the air inlet line of said engine;

percentage of oxygen present in the exhaust gases by means of a specific sensor in the exhaust gas and injected fuel quantity displayed by the injection controller;

the comparison of said at least three magnitudes, for the determination of possible operation faults.

According to a possible embodiment of the invention, the method also comprises the determination of a fourth magnitude, a reference value of the intake air flow rate ($Air_{ref}$) preferably in an engine operation point (preferably at idle speed), where the intake air flow is not influenced by system tolerances (as resistance in air intake system (e.g. air filter) or resistance in exhaust system (e.g. silencer or - if present - collection state of particulate filter) .

It is understood that the detected parameters and magnitudes may be as-are themselves or values correlated thereto.

The oxygen content may be, according to an embodiment of the invention, determined by a lambda or oxygen sensor, or can be determined by an off-board equipment.

According to preferred embodiments ,the engine is a supercharged engine, preferably a diesel engine and preferably an engine provided with exhaust gas recirculation. Said pressure ($p_{in}$) and temperature ($T_{in}$) are then the boost pressure and temperature ($p_{boost}$, $T_{boost}$).

Preferably, said series of parameters includes the fuel flow rate fed to the engine ($Q_f$) in the time unit, which is a datum on which the engine apparatus operation management system usually intervenes and which is available to it, and may also include the engine revolution speed.

According to a possible embodiment of the invention, the four magnitudes may be an intake air flow rate ($Air_{hfm}$) detected by the sensor, an intake air flow rate ($Air_{asmod}$) calculated according to said supercharging temperatures and pressure, the engine revolution speed and a volumetric efficiency value;

an intake air flow rate ($Air_{lsu}$) calculated as from the fed fuel flow rate and the percentage of oxygen in the exhaust gases;

optionally, an intake flow rate $Air_{ref}$ statistically determined and corrected as function of ambient temperature and barometric pressure.

According to a preferred embodiment, the method comprises the determination of the magnitudes in conditions in which the recirculated gas flow rate should be null (valve closed).

The object of the invention is specifically contained in the accompanying claims.

LIST OF FIGURES

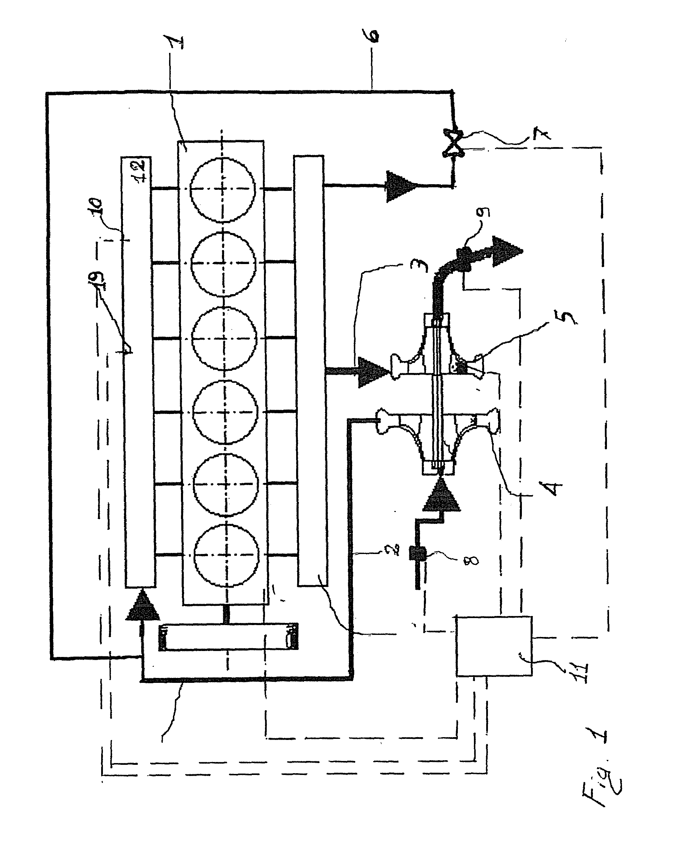

The present invention will now be illustrated by means of the detailed description of preferred but not exclusive embodiments, provided by way of example only, with the aid of accompanying figure 1 which shows the diagram of a supercharged engine apparatus with exhaust gas recirculation to which the method according to the following injection is applied.

DETAILED DESCRIPTION OF AN EMBODIMENT

The method according to the present invention is preferably applicable to a vehicle, preferably an industrial vehicle, which is provided with an engine apparatus comprising an internal combustion engine 1, preferably a diesel engine, an intake line 2 and an exhaust gas line 3. The intake line may comprise a supercharging compressor 4 (driven by a turbine or another device), possibly with a cooling device, and the exhaust line may comprise a turbine 5 adapted to drive the compressor, turbine which may be of the variable geometry type, according to a particular embodiment of the invention. An exhaust gas recirculation line 6 may be foreseen, connecting two appropriate points of the exhaust and intake lines. Specific means (not shown), per se known, such as pumps or Venturi devices or cooling devices or throttling device in the intake manifold, may be provided to allow a suitable flow rate and condition of recirculated gases in line 6. A recirculation valve 7 may regulate said flow rate. According to a preferred embodiment, the recirculation line connects the high pressure branches of the engine intake and exhaust lines, i.e. connects a point upstream of turbine 5 to a point downstream of compressor 4. However, circulation may also be performed otherwise.

An air flow rate sensor 8 is arranged on the intake line, preferably upstream of the compressor. A lambda sensor 9 is arranged at an appropriate point of the exhaust line. Temperature sensor 19 and pressure sensor 10 detect such parameters in an appropriate point of the air intake line and, in case of a supercharged engine, downstream of the compressor; if exhaust gas recirculation (EGR) is foreseen, those sensors are preferably placed downstream of the recirculated gas reintroduction point, e.g. in the intake manifold 12.

An engine operation management system 11, which may be a customary electronic unit, is adapted to receive signals from the various sensors, so as to detect other operating parameters in known manner, among which the engine revolution speed, for controlling various components, such as, for example, the injectors, for determining the injected fuel flow rate and valve 7 for regulating the recirculation flow rate according to the collected data, and, if present, the opening of variable geometry turbine nozzle 5, or possible valves. The control unit also receives data regarding the torque and the power required by the engine according to the driver's commands. Other sensors and controls may be present in the system, and be also used by the control unit, such as temperature sensors for example in the exhaust gas line, especially in presence of gas treatment systems, such as catalytic converters, regenerative traps, or other. According to a preferred embodiment, the unit during maintenance operation may be externally controlled, for example, it may be connected to an external control apparatus (e.g. tester), such as a computer and send the detected operating data to it. The unit may be controlled by the external apparatus, for acting on the various components (e.g. injection, opening of variable geometry turbine, opening of recirculation valve, operation of other components such as the engine cooling fan) in the desired manner. This constitutes a preferred way for conducting the diagnostic method according to the present invention.

Depending on the data detected by unit 11, the unit itself or an external apparatus is capable of determining the at least three magnitudes. According to a preferred embodiment the following air flow ratios may be determined: $Air_{lsu}$, $Air_{hfm}$ and

$Air_{smod}$. If required, the unit or apparatus is also capable of performing the comparison of the magnitudes between each other and also with the fourth magnitude $Air_{ref}$ (externally determined) and individuating possible faults.

In the case of the four above-indicated air flow rates, it is noted that: $Air_{HFM}$ is the air flow rate measured by flow rate sensor 8;

$$Air_{asmod} = \rho_{airNorm}*(p_{in}/p_{Norm})*(T_{Norm}/T_{in})*V_m*E_v$$

where $V_m$ is the engine revolution speed ($s^{-1}$) and $E_v$ the volumetric efficiency (a volume) and the $\rho_{airNorm}$ density of the intake gas (air) at the normal pressure $p_{Norm}$ and normal temperature $T_{Norm}$. The volumetric efficiency is a datum available from models generally available for a certain type of engine mainly according to $V_m$, models, which may also take other parameters into account. In case of a supercharged engine, $p_{in}$ and $T_{in}$ are the boost pressure and temperature $p_{boost}$ and $T_{boost}$.

$Air_{ref}$ is an "a priori" value preferably at low engine speed, statistically determined and affected only by ambient conditions, such as the altitude (which may also be taken into account by correcting the value as function of the barometric pressure) but not by variations in the air intake and exhaust system, which may influence the flow resistance of those systems (as more or less clogged intake air filter, more or less clogged particulate filter in exhaust system if available, state of the muffler in the exhaust system) and therefore have an impact on the other three measured magnitudes.

Finally: $Air_{lsu} = \lambda*A/F_{st}*Q_f$ where $A/F_{st}$ is the stoichometric air-fuel ratio and $\lambda$ the actual air/fuel ratio measured by the exhaust gas sensor (9) (or calculated with the oxygen content measured by the exhaust gas sensor (9)) compared to the stoichometric air fuel ratio.

The indicated air flow rates can be mass flow rates for convenience, but volumetric flow rates may be calculated, if preferred.

The four rates, may be at first determined under conditions in which there must be no exhaust gas recirculation (EGR) flow rate, which may be imposed by the control unit also by controlling the external apparatus, for example, as usual, by closing valve 7, but also by operating other types of recirculation means if present.

Table 1 summarises a series of possibilities wherein $Air_{HFM}$, $Air_{Asmod}$ and $Air_{LSU}$ are determined and do not coincide. The table contemplates an example case regarding a supercharged engine, however the method can be applied to non supercharged engines. The table can be simplified by eliminating, for example, the case of a leakage downstream the compressor. Similarly, the analysis can be simplified for the case wherein no exhaust gas recirculation is foreseen, or the oxygen content is not determined by a lambda sensor that is under investigation but by an of board analysis apparatus, or when $Air_{ref}$ is used instead of other parameters or magnitudes. In the exemplified case, table 1 allows to operate a first choice according to the deviated value; the table is easily explained. "OK" indicates a correct flow rate; "deviation +" and "deviation -" respectively correspond to a determined value for a magnitude considered greater or smaller than the real flow rate value.

In all the situations in which, for each failure symptom, two deviations occur, the fourth value $Air_{ref}$ above mentioned may be used to determine which component is actually faulty. In many real situations, two deviations occur, mainly due to the fact that $Air_{LSU}$ value is often deviating because of a low accuracy in the fuel injected quantity estimation by engine control unit at low load. Moreover, the fourth $Air_{ref}$ value is useful to distinguish between a fuelling problem and a lambda sensor problem.

According to an embodiment of the invention, the diagnosis operations may be performed as follows.

With the engine off, it is verified whether the air flow rate sensor indicates a null value and whether the supercharging pressure sensor indicates ambient pressure. A deviation under this condition yet indicates an offset in the calibration of the dedicated sensor and may be taken into consideration during the evaluation of the further steps described below.

In the case of deviation of the measured air flow rate, the scope may be restricted to the cases of a deviation of the air flow rate sensor or to losses in the feeding line, although there may also be present a loss in the exhaust system, specifically a leakage of recirculation gas with the valve closed, specifically if the value $Air_{lsu}$ also deviates.

If the $Air_{asmod}$ value is wrong, on the other hand, an error of the supercharging temperature sensor may be assumed, if in the previous test no faults of the pressure sensor were detected (and furthermore if no possible deviations of the pressure value are detected also if the previous reference value is correct).

Tests at stationary reference rates may then be performed, for example 3, (low, medium and high revolution speed), again with the recirculation line closed, to explore the entire possible range of air flow rates. In order to increase the supercharging pressure, the variable geometry turbine nozzle may be closed (commanded by the control unit). Furthermore, energy consuming devices, such as the engine cooling fan, air conditioner, electrical heaters, lights and other electric consumers may be operated, again remitting such command to the control unit, to increase the absorbed engine power and therefore to increase the energy to the turbocharger and on its turn, to increase the air flow by a higher boost pressure. Furthermore, overheating during the test can be avoided by operating the engine cooling fan. Thus, on a customary industrial vehicle it has been found that in general the entire intake air flow rate range and approximately half or even more of the feeding pressure field may by explored, again by comparing the values of the magnitudes even in a workshop test. The adoption of at least 2, preferably 3 but even more operating points, further allows evaluating the linearity of the variations measured by the sensors, which may give more precise information on possible faults.

During a deceleration test, with cut-off fuel feed, a calibration point of the lambda sensor (which must indicate a percentage by volume of $O_2$ of 20.95%) is verified.

Finally, a series of tests with different gas recirculation flow rates may be performed by opening the valve. As apparent by comparing case 6 in table 1, wherein the text in parenthesis refers to an evaluation without reference values, a decrease of the $Air_{hfm}$ air flow rate (part of the gases fed to the engine do not come from the outside) and of the $Air_{lsu}$ air flow rate should be expected, while the $Air_{asmod}$ flow rate is affected only slightly by the composition of the gases which is altered by the presence of recirculation and which should represent the nearly correct gas flow rate through the engine. This is true when keeping the engine speed constant (which usually occurs naturally when the recirculation opens), since there is only a minor variation due to the increase of supercharging temperature and reduced supercharging pressure because gases are subtracted from the turbine, if the recirculation is on the high pressure branch.

Thus, it is also possible to observe whether the decrease of $Air_{hfm}$ and $Air_{lsu}$ depends linearly on the growth of the recirculated exhaust flow rate, which should depend in known way on the opening of the valve.

By performing the tests as mentioned above, in case the results are those expected by the test, one may express an opinion of full functionality of the entire engine management system.

As shown in table 1, an evaluation is possible if the value differ.

If the value of $Air_{lsu}$ differs from the other two which agree, a lambda sensor problem may be considered. If not detected in the deceleration test (which indicates an offset calibration), there may however be a lambda sensor problem (gain calibration), particularly if the flow rate value of the fuel is correct with respect to the above mentioned reference value $Air_{ref}$ which depends on the engine type. Otherwise, it is likely that there is an incorrect evaluation of the fuel flow rate.

If it is the value of $Air_{asmod}$ to differ from the other two, which instead agree, there may be a temperature or pressure sensor problem (e.g. gain calibration if the engine off test was correct), or an undesired introduction of recirculation gas (valve leakage). The above-listed tests in the various conditions are also capable of identifying the component which generates the problem (and also the nature of the problem): for example, if the deviation of $Air_{asmod}$ does not occur with the engine off and all the values agree at this point but the deviation appears only at high load, there is a deviation in gain calibration of either the pressure or the temperature sensor or EGR control device not fully closed (if $Air_{Asmod}$ higher than $Air_{LSU}$ and $Air_{hfm}$)

If the only different value is $Air_{hfm}$, an error to the air flow rate sensor may have occurred (possibly detectable if there is an offset with engine off, or with a test at other flow rates if the problem is a non-linearity of response), or a loss of air in the intake line which gives a decreased value of $Air_{hfm}$ if the loss is upstream of the compressor or an increased value if the loss is downstream (see table).

In case the boost pressure shows a deviation at engine off test, the $Air_{ASMOD}$ can be calculated with a boost pressure $p_{boost}$ corrected by the deviation; or the $Air_{hfm}$ differs from 0 at engine off test the $Air_{hfm}$ can be corrected by the difference from 0; or the oxygen content measured by the exhaust gas sensor differs from 20.95% during engine deceleration without fuel feeding, the $Air_{LSU}$ can be calculated with a $\lambda$ calculated by the correction of the measured Oxygen content by this difference. Such corrected magnitudes $Air_{hfmCorr}$ and/or $Air_{ASMODCorr}$ and/or $Air_{LSUCorr}$ can be used instead of the direct magnitudes in table 1). If the corresponding results are now correct, this indicates that the dedicated sensor is calibrated with an offset and there is no other failure in the system.

The above-listed tests in different conditions may be performed in the order shown or in an other order, if preferable.

By proceeding according to the present invention, it should be noted that, once the presence of a fault is detected, it is possible to decide on a case-by-case basis which subsequent test is appropriate to be conducted in order to identify the possible cause of the fault more rapidly.

After having identified the cause, it is possible to calibrate the component or perform the necessary interventions. Additional tests with $Air_{ref}$ can help to individuate failures.

It has been suggested to determine the four air flow rates as magnitudes to be compared. Except for $Air_{hfm}$ it must be noted that the flow rates are virtual. For example, in presence of recirculation it is apparent that $Air_{asmod}$ is correlated to a gas flow rate which also comprises exhaust gases.

Furthermore, it is possible to find other different groups of magnitudes to be compared, again correlated with at least part of the above-indicated parameters. For example, the relationships between the above-determined air flow rates may be identified. Thus, by varying a condition which affects both flow rates of a relationship, it may be easier to observe whether both have a linear variation.

Otherwise, it is also possible to determine, as from the air flow rates $Air_{asmod}$ and

$Air_{hfm}$ and from measured oxygen values , virtual fuel flow rates and to evaluate the deviation with respect to $Q_f$ thereof. The latter when it is required to highlight the value of $Q_f$ considering that this may be subjected to considerable error, and it may be required to always correlate it with the reference value $Air_{ref}$.

In any case, the four determined magnitudes, considering the parameters identified above, must be mathematically independent, i.e. for each pair of magnitudes it must be possible to identify at least one parameter or series of parameters whose variation, taken individually, causes a different variation of the magnitudes.

It is apparent that the method according to the present invention, based on the identified parameters and magnitudes, allows a more rapid identification of the engine control system problems.

The invention further relates to an engine apparatus, specifically for industrial vehicles, having a preferably diesel engine, an intake line with one or more supercharging compressor(s) which may include a cooling device which may be by-passed or not by an additional control device and an exhaust line preferably but not mandatory with one or more turbine(s), preferably but not mandatory with variable geometry, adapted to feed said compressor(s), an exhaust gases recirculation line which may include a cooling device, adapted to recirculate a part of the exhaust gases from the exhaust line to the intake line, preferably from a point upstream of said turbine to a point downstream of said compressor, adjustment means of said recirculation flow rate, an air flow sensor arranged on said intake line, preferably upstream of the compressor, a pressure sensor and a supercharging temperature sensor arranged on said intake line downstream of the recirculated gas introduction point and of said compressor, a lambda sensor arranged on said exhaust line, fuel injection means of said engine, characterised in that it comprises a control unit adapted to receive signals from said sensors, to receive a signal correlated to the engine speed and to control the adjustment means of said recirculation flow rate and the fuel injection, characterised in that said control unit is adapted to implement the above-described method, alone or connected to an electronic apparatus external to the vehicle.

The invention further relates to a computer program, as said unit and/or said apparatus adapted for implementing said method may be considered, and a vehicle provided with an engine apparatus as defined above.

*Table 1*

| Case | Problem or non-calibrated/faulty component | $Air_{HFM}$ | $Air_{ASMOD}$ | $Air_{LSU}$ |
|---|---|---|---|---|
| 1 | Air flow rate sensor (HFM) | Variation +/- | OK (=$Air_{LSU}$) | OK(=$Air_{ASMOD}$) |
| 2 | Intake line loss upstream of the compressor | Variation - | OK(=$Air_{LSU}$) | OK(=$Air_{ASMOD}$) |
| 3 | Intake line loss downstream of the compressor | Variation + | OK(=$Air_{LSU}$) | OK(=$Air_{ASMOD}$) |

(continued)

| Case | Problem or non-calibrated/faulty component | Air$_{HFM}$ | Air$_{ASMOD}$ | Air$_{LSU}$ |
|---|---|---|---|---|
| 4 | Supercharging pressure sensor | OK(=Air$_{LSU}$) | Variation +/- | OK(=Air$_{hfm}$) |
| 5 | Supercharging temperature sensor | OK(=Air$_{LSU}$) | Variation +/- | OK(=Air$_{hfm}$) |
| 6 | Recirculation valve loss (EGR) | Variation - (=Air$_{LSU}$) | ≈OK (Variation +) | Variation - OK(=Air$_{hfm}$) |
| 7 | Volumetric efficiency error (e.g. caused by wrong valve clearance, deposits in the inlet port or mismatched valve timing) | OK(=Air$_{LSU}$) | Variation +/- | OK(=Air$_{hfm}$) |
| 8 | Fuel flow rate value error | OK(=Air$_{ASMOD}$) | OK (=Air$_{hfm}$) | Variation +/- |
| 9 | Lambda sensor | OK(=Air$_{ASMOD}$) | OK(=Air$_{hfm}$) | Variation +/- |

**Claims**

1. A diagnostic method for a vehicle engine apparatus, said method comprising the following operations: the determination of at least three reciprocally and mathematically independent magnitudes each based on at least part of a series of parameters including:

   intake air flow rate measured by a specific sensor (8) (Air$_{hfm}$);
   a reference value of the intake air flow rate (Air$_{ref}$)
   pressure ($P_{in}$) and temperature ($T_{in}$) in the air inlet line of said engine;
   percentage of oxygen present in the exhaust gases and fuel supply quantity
   the comparison of said at least three magnitudes, for the determination of possible operation faults.

2. A method according to claim 1, **characterised in that** said reference value Air$_{ref}$ is statistically determined and corrected as function of ambient temperature and barometric pressure.

3. A method according to any preceding claim, **characterised in that** a magnitude, based on a reference value of the intake air flow rate Air$_{ref}$ is compared with other three magnitudes in order to detect multiple failures.

4. A method according to any preceding claim, **characterised in that** said engine is a supercharged engine and the pressure ($p_{in}$) and temperature ($T_{in}$) in the air inlet line of said engine are the supercharging pressure and temperature ($p_{boost}$, $T_{boost}$).

5. A method according to any preceding claim, **characterised in that** said engine is a diesel engine.

6. A method according to any preceding claim, **characterised in that** said engine is an engine with exhaust gas recirculation.

7. A method according to claims 4 and 6, **characterised in that** said exhaust gas recirculation is possible from a point upstream of the turbine (5) to a point downstream of the supercharging compressor (4).

8. A method according to any preceding claim, **characterised in that** said series of parameters includes the flow rate of fuel fed to the engine ($Q_f$) in the time unit, and the engine revolution speed ($V_m$).

9. A method according to any preceding claim, **characterised in that** said three magnitudes are the intake air flow rate (Air$_{hfm}$) detected by the sensor, an intake air flow rate (Air$_{asmod}$) calculated according to said supercharging temperatures and pressure, to the engine revolution speed and to a volumetric efficiency value ($E_v$); an intake air flow rate (Air$_{lsu}$) calculated as from the flow rate of fed fuel and the percentage of oxygen in the exhaust gases.

10. A method according to claims 3 and 9, wherein said magnitude, based on a reference value of the intake air flow rate $Air_{ref}$, if used, is said reference value $Air_{ref}$ itself.

11. A method according to any preceding claim, **characterised in that** it comprises the determination of said magnitudes in a condition in which the recirculation gas flow rate should be null.

12. A method according to claim 11, **characterised in that** said conditions corresponds to the closing of a regulation valve (7) of the recirculated gas flow rate.

13. A method according to any preceding claim, **characterised in that** it comprises the determination of said magnitudes in presence of one or more different recirculation flow rates.

14. A method according to any preceding claim, **characterised in that** it comprises the determination of said magnitudes when the engine is off.

15. A method according to any preceding claim, **characterised in that** it comprises the determination of said magnitudes with the engine idling.

16. A method according to any preceding claim, **characterised in that** it comprises the determination of said magnitudes as per at least three different engine revolution speeds.

17. A method according to claim 16 **characterised in that** the determination inserting energy consuming devices capable of increasing the load on engine, preferably any possible energy consuming device.

18. A method according to claims 4 and 16, **characterised in that** the supercharging turbine is a variable geometry turbine and is taken to maximum closing position during the determination of the magnitudes.

19. A method according to any preceding claim, **characterised in that** it comprises the determination of the oxygen content by means of a lambda sensor.

20. A method according to claim 19, **characterised in that** said oxygen content is determined during engine deceleration, in absence of fuel feed.

21. A method according to any preceding claim, **characterised in that** it is performed by means of an electronic unit 11, adapted to detect said parameters and to control the fuel injection and the exhaust gas recirculation flow rate and optionally the opening of the nozzle of the variable geometry turbine, if present.

22. A method according to claim 21, **characterised in that** said unit is connected to an electronic apparatus external to the vehicle.

23. An engine apparatus for vehicle, having preferably a diesel engine (1), an intake line (2) and an exhaust gas line (3), an air flow rate sensor (8) arranged on said intake line, a pressure sensor (19) and a temperature sensor (10) arranged on said intake line, a lambda or oxygen sensor (9) arranged on said exhaust line, fuel injection means to said engine, **characterised in that** it comprises a control unit (11) adapted to receive signals from said sensors, to receive a signal correlated to the engine speed and to control the adjustment means of said recirculation flow rate and the fuel injection, **characterised in that** said control unit is adapted to implement the method according to any preceding claim.

24. An engine apparatus according to claim 23, **characterised in that** it comprises one or more supercharging compressor(s) (4) optionally driven by one or more turbine(s) (5), placed on said exhaust line and said air flow sensor is placed upstream of the compressor and said pressure and temperature sensors are a supercharging pressure sensor (19) and a temperature sensor (10) arranged on said intake line downstream of said compressor.

25. An engine apparatus according to claim 23 or 24, **characterised in that** it is equipped with a exhaust gas recirculation line (6) and said pressure and temperature sensors are placed downstream of the recirculated gas introduction point.

26. An engine apparatus according to claim 25, **characterised in that** said recirculation line connects a point upstream of said turbine(s) to a point downstream of said compressor(s), respectively on the exhaust and intake lines.

**27.** An engine apparatus according to any of claims 24 to 26, **characterised in that** said turbine is a variable geometry turbine.

**28.** A computer program adapted to implement the method according to any claim from 1 to 22.

**29.** A vehicle, specifically an industrial vehicle, provided with an engine apparatus according to any claim from 23 to 27.

**30.** A diagnostic device for diagnosing the operation of an internal combustion engine, said device comprising means for determining at least three reciprocally and mathematically independent magnitudes each based on at least part of a series of parameters including:

measured intake air flow rate ($Air_{hfm}$);
a reference value of the intake air flow rate ($Air_{ref}$);
pressure ($p_{in}$) and temperature ($T_{in}$) in the air inlet line of said engine;
percentage of oxygen present in the exhaust gases and fuel supply quantity; and means for comparing said at least three magnitudes and for the determination of possible operation faults.

**31.** A control unit for operating an internal combustion engine, said control unit comprising means for diagnosing the operation of the internal combustion engine, said means for diagnosing comprising means for determining at least three reciprocally and mathematically independent magnitudes each based on at least part of a series of parameters including:

measured intake air flow rate ($Air_{hfm}$);
a reference value of the intake air flow rate ($Air_{ref}$);
pressure ($p_{in}$) and temperature ($T_{in}$) in the air inlet line of said engine;
percentage of oxygen present in the exhaust gases and fuel supply quantity;
and means for comparing said at least three magnitudes and for the determination of possible operation faults.

Fig. 1

European Patent
Office

**EUROPEAN SEARCH REPORT**

Application Number

EP 07 12 0463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 384 707 A (KERNS JAMES M [US] ET AL) 24 January 1995 (1995-01-24) * figures 1,2 * * column 1, line 46 - column 2, line 36 * ----- | 1-31 | INV. F02D41/00 F02D41/14 F02D41/22 |
| X | US 6 427 527 B1 (LANGER WINFRIED [DE]) 6 August 2002 (2002-08-06) * abstract * * figures 1,2 * * column 1, line 26 - column 3, line 9 * ----- | 1-8,10, 19,21-31 | |
| X | US 2006/005821 A1 (OSUMI NAOKI [JP] ET AL OSUMI NAOKI [JP]) 12 January 2006 (2006-01-12) * paragraphs [0009] - [0011] * ----- | 1-8,10, 19,21-31 | |
| | | | TECHNICAL FIELDS SEARCHED (IPC) |
| | | | F02D |

The present search report has been drawn up for all claims

| Place of search | Date of completion of the search | Examiner |
|---|---|---|
| The Hague | 28 April 2008 | Parmentier, Hélène |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ..........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 07 12 0463

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2008

| Patent document cited in search report | | Publication date | Patent family member(s) | | Publication date |
|---|---|---|---|---|---|
| US 5384707 | A | 24-01-1995 | NONE | | |
| US 6427527 | B1 | 06-08-2002 | CN | 1291681 A | 18-04-2001 |
| | | | DE | 19946874 A1 | 05-04-2001 |
| | | | FR | 2799236 A1 | 06-04-2001 |
| | | | JP | 2001123869 A | 08-05-2001 |
| US 2006005821 | A1 | 12-01-2006 | US | 2008004787 A1 | 03-01-2008 |

For more details about this annex : see Official Journal of the European Patent Office, No. 12/82